# EUROPEAN PATENT SPECIFICATION

(11) **EP 3 211 692 B1**
(45) Date of publication and mention of the grant of the patent: **01.08.2018**
(21) Application number: 15851832.4
(22) Date of filing: 26.10.2015
(51) Int. Cl.: H01M 2/14, H01M 2/16, H01M 10/052

(54) **METHOD FOR CUTTING SEPARATION MEMBRANE FOR BATTERY**
VERFAHREN ZUM SCHNEIDEN EINER TRENNMEMBRAN FÜR EINE BATTERIE
PROCÉDÉ DE DÉCOUPE DE MEMBRANE DE SÉPARATION POUR BATTERIE

(30) Priority: 24.10.2014 KR 20140145373; 23.10.2015 KR 20150148290
(43) Date of publication of application: 30.08.2017
(73) Proprietor: LG Chem, Ltd., Seoul 07336 (KR)
(72) Inventor: KIM, Tae-Su, Daejeon 34122 (KR); SUNG, Ki-Eun, Daejeon 34122 (KR); LEE, Jin-Soo, Daejeon 34122 (KR); SHIN, Bu-Gon, Daejeon 34122 (KR); LEE, Sang-Ik, Daejeon 34122 (KR); LEE, Dae-Won, Daejeon 34122 (KR)
(74) Representative: Cabinet Plasseraud
(86) International application number: PCT/KR2015/011337
(87) International publication number: WO 2016/064259

(56) References cited:
- WO-A1-2013/035519
- JP-A- 2005 230 872
- JP-A- 2013 119 094
- JP-A- 2013 119 095
- KR-A- 20010 007 879
- KR-A- 20130 102 711
- KR-A- 20130 124 341
- US-A1- 2012 276 435

## Description

### Technical Field

The present invention is a method for cutting a separation membrane for a battery by using a laser cutting technology capable of achieving a free shape processing.

### Background Art

Lithium ion batteries are an important element part of the times of mobile devices and electric cars, and the need for increasing the capacity is constantly raised. In order to maximize the utilization of the internal spaces of mobile devices and electric cars, there is a need for a technology of manufacturing batteries having a circular shape instead of the existing rectangular shape, a 3D-structure, and various shapes.

However, in order to manufacture a battery having an irregular shape such as a circular shape instead of the existing rectangular shape, a 3D-structure, and various shapes, not only electrodes for manufacturing a battery, but also separation membranes must be able to be cut into various shapes. For this purpose, in the related art, a cutting process of a separation membrane has to be carried out by a process of carrying out cutting a separation membrane by means of a simple straight cutting knife, or carrying out cutting a separation membrane by manufacturing a mold suitable for the shape of a battery. However, in this case, there is a problem in that the time for manufacturing a separation membrane mold is needed and mold costs have to be additionally paid, so that the battery price competitiveness may deteriorate.

Further, in the case of cutting by the related art, a battery is so vulnerable to tensile and shear stresses caused by applying physical forces to the battery that cracks and the like easily occur on a cut surface, and accordingly, there is a problem in that the quality deteriorates and manufacturing costs are increased because the cross section of the laminated film need to be polished after cutting the separation membrane.

In order to solve the problems, for example, Korean Patent Application Laid-Open No. 10-2012-0043941 suggest a laser cutting device for cutting a film used for cutting a laminated film and a method for cutting a film using the same, but there is a problem in that the device and the method are not suitable for being applied to the cutting of a separation membrane for an irregular battery, and fail to exhibit an optimal cutting performance Pertinent prior art documents relating to a method of cutting membranes and laser cutting apparatuses: WO 2013/035519 A1, JP 2005 230872 A and JP 2013 119095 A.

### Disclosure

### Technical Problem

Accordingly, a mold cutting used to manufacture an irregular battery and a separation membrane in the related art has a problem in that whenever a model for an object to be cut is changed, the mold also has to be replaced.

The present invention has been made in an effort to solve the problems in the related art as described above, and

an object thereof is to allow a cut cross section to have a uniform cut surface, in contrast with physical cutting, by applying laser to a cutting process of a separation membrane on which cracks and the like occur when the separation membrane is cut by conventional physical methods.

### Technical Solution

In order to accomplish the above object,

the present invention provides a method for cutting a separation membrane for a battery, according to claim 1, in which the separation membrane is cut by laser radiation on the separation membrane, wherein the pulse repetition rate of the laser is 10 to 500 kHz.

Further, the present invention provides a separation membrane cutting device using the cutting method, wherein the separation membrane cutting device uses a biaxial beam scanner and an F-theta lens, which are capable of transmitting 2-D light for light transfer.

In addition, the present invention provides a separation membrane for a battery manufactured by the cutting method.

Furthermore, the present invention provides a battery including the separation membrane.

### Advantageous Effects

By the method for cutting a separation membrane according to the present invention, there is an advantage in that as the laser cutting is applied to the cutting process of a separation membrane in which there occurs a problem in that the roughness of the cut surface becomes prominent by conventional physical cutting processes, a user can process any desired shape, and secure an optimal cutting quality of the separation membrane, and a separate mold design and manufacture is not needed, and thus separation membranes having various shapes can be used without replacing the molds, and as a result, the molds are easily exchanged, and the mold costs can be reduced.

### Description of Drawings

FIG. 1A through IE is a photograph illustrating the cross section of a separation membrane cut according to the pulse repetition rate by using the cutting method of the present invention.
FIG. 2A through 2D is a photograph illustrating the result of cutting a separation membrane laminated with 20 layers by using the cutting method of the present invention.
FIG. 3A through 3C is a photograph illustrating the cross section of a separation membrane cut according to the cutting speed by using the cutting method of the present invention.
FIG. 4 is a photograph illustrating the cross section of a cut surface manufactured by the cutting method in the related art.
FIG. 5A through 5C is a photograph illustrating the cross section of a cut surface of a separation membrane manufactured by the CO₂ laser of the present invention.

### Best Mode

Hereinafter, the present invention will be described in detail.

The method for cutting a separation membrane according to the present invention is characterized in that in cutting the separation membrane by laser radiation on the separation membrane, a pulse repetition rate of the laser is 10 to 500 kHz.

The method for cutting a separation membrane according to the present invention may be applied to a cutting process of cutting a separation membrane included in a battery, more specifically, a battery for a secondary battery, and more specifically, a polymer battery for a secondary battery.

In the present invention, in order to cut the separation membrane for a battery, which is an object to be cut, a separation membrane for a battery, which is an object to be cut, is first prepared.

The separation membrane may include a base material layer and a coating layer on one surface or both surfaces of the base material layer.

The base material layer is not particularly limited, but preferably, a base material layer including a polyolefin-series polymer may be used.

Further, in the present invention, the separation membrane for a battery, which is an object to be cut may have a structure in which two or more separation membranes are laminated. In the case of the conventional invention, as a plurality of separation membranes is laminated, and then cut, there may occur a problem with the cutting cross section, but the present invention may simultaneously cut a plurality of separation membranes due to the technical feature to be described below.

In the present invention, the coating layer is not particularly limited as long as the coating layer includes alumina, but preferably, a self-reinforcement structure (SRS) coating layer including alumina may be used.

In the present invention, it is possible to use the separation membrane having a thickness of 5 to 50 um, and more preferably, it is possible to use a thickness between 10 and 25 um.

In order to cut the separation membrane for a battery, which is an object to be cut, the present invention uses laser.

Laser is used for the cutting, and as the laser used in the present invention, a pulse laser or a CO₂ laser may be preferably used, and the laser is not limited thereto. When the pulse laser is used during the cutting of the separation membrane for a battery of the present invention, an outstandingly uniform cut surface may be obtained in contrast with physical cutting processes.

In the present invention, when the laser is a pulse laser, a laser having a pulse repetition rate of 10 to 500 kHz may be used, a laser having a pulse repetition rate of 10 to 100 kHz may be preferably used, and a laser having a pulse repetition rate of 10 to 40 kHz may be more preferably used. When the conditions as described above are satisfied, during the cutting of a separation membrane, an outstandingly uniform cut surface of the separation membrane may be obtained in contrast with physical cutting processes.

Further, in the present invention, the laser having a cutting speed of 700 to 2,000 mm/s may be used. When the conditions as described above are satisfied, during the cutting of a separation membrane, an outstandingly uniform cut surface of the separation membrane may be obtained in contrast with physical cutting processes.

In addition, in the present invention, the laser having a wavelength of 300 to 1,200 nm may be used. Furthermore, in the present invention, the laser having a pulse width of 5 to 500 nm may be used.

Further, in the present invention, when the laser is a pulse laser, the most economically effective effect is exhibited when the output of the laser is preferably 20 to 500 W, more preferably 50 to 200 W, and most preferably 50 to 100 W.

In addition, when the laser is a CO₂ laser, a laser having an output of 10 to 200 W may be used, and a laser having a spot size of 50 to 200 um may be used.

When the conditions as described above are satisfied, during the cutting of a separation membrane, an outstandingly uniform cut surface of the separation membrane may be obtained in contrast with physical cutting processes.

Furthermore, when the conditions as described above are satisfied, the separation membrane may be cut at a production speed of 300 to 2,000 mm/s.

Further, when the conditions as described above are satisfied, a separation membrane cutting tolerance of 100 um or less may be adjusted by the scan precision of a 2D-scanner and the tolerance of a mechanical part for fixing a separation membrane.

In addition, when the conditions as described above are satisfied, it is possible to cut 10 or more separation membranes which used to be difficult to cut by the conventional invention.

Furthermore, the present invention provides a separation membrane for a battery manufactured by the method for cutting a separation membrane.

As reviewed above, since the separation membrane for a battery manufactured by the present invention is cut by a pulse laser, the surface and cross section of the cut surface are very smooth, and the occurrence of cracks and the like is significantly reduced. The separation membrane for a battery manufactured by the present invention has outstandingly improved surface properties as compared to the separation membranes for a battery manufactured by the conventional methods.

Further, the present invention provides a separation membrane cutting device using the cutting method,

in which the separation membrane cutting device uses a biaxial beam scanner and an F-theta lens, which are capable of transmitting 2-D light for light transfer.

In addition, the present invention provides a battery including the separation membrane for a battery.

### Mode for Invention

Hereinafter, the present invention will be described in more detail based on Examples, but exemplary embodiments of the present invention to be disclosed below are only illustrative, and the scope of the present invention is not limited to these exemplary embodiments. The scope of the present invention is defined by the claims, and is intended to include any modification within the meaning and scope equivalent to the terms of the claims.

### Examples

### Change in Cutting Characteristics According to Pulse Repetition Rate

### [Example 1]

A separation membrane for a battery (manufactured by LG Chem.) was prepared, and then the separation membrane was cut by using a fiber pulse /CW tunable laser device (SPI, G4). During the cutting process, a 50 W pulse laser was used to cut the separation membrane under conditions of a wavelength of 1,070 nm, a pulse width of 100 nm, a pulse repetition rate of 75 kHz, and a cutting speed of 1,000 mm/s.

### [Example 2]

The separation membrane was cut under the same conditions as in Example 1, except that the pulse repetition rate of the laser device was 120 kHz.

### [Example 3]

The separation membrane was cut under the same conditions as in Example 1, except that the pulse repetition rate of the laser device was 180 kHz.

### [Example 4]

The separation membrane was cut under the same conditions as in Example 1, except that the pulse repetition rate of the laser device was 400 kHz.

### [Example 5]

The separation membrane was cut under the same conditions as in Example 1, except that the pulse repetition rate of the laser device was 20 kHz, 20 separation membranes were laminated, and then the frequency of laser radiation was increased to 10.

### [Comparative Example 1]

The separation membrane was cut under the same conditions as in Example 1, except that the pulse repetition rate of the laser device was 1 MHz.

### [Comparative Example 2]

The separation membrane was cut under the same conditions as in Example 5, except that the pulse repetition rate of the laser device was 1 MHz.

### Change in Cutting Characteristics According to Cutting Speed

### [Example 6]

The separation membrane was cut under the same conditions as in Example 1, except that during the cutting process, a 50 W pulse laser was used to cut the separation membrane under conditions of a pulse repetition rate of 400 kHz and a cutting speed of 800 mm/s.

### [Example 7]

The separation membrane was cut under the same conditions as in Example 6, except that the cutting speed of the laser device was 1,000mm.

### [Comparative Example 3]

The separation membrane was cut under the same conditions as in Example 6, except that the cutting speed of the laser device was 600 mm/s.

### [Comparative Example 4]

The same separation membrane for a battery as in Example 1 was prepared, and then the separation membrane was cut by using a pair of scissors, which are a conventional physical cutting method.

Change in Cutting Characteristics According to Change in Spot Size of CO₂ Laser

### [Example 8]

The separation membrane was cut under the same conditions as in Example 1, except that a 12 W CO₂ laser was used, and the separation membrane was cut into a spot size of 50 um under conditions of a pulse repetition rate of 100 kHz and a cutting speed of 500 mm/s.

### [Example 9]

The separation membrane was cut under the same conditions as in Example 8, except that a 40 W CO₂ laser was used, and the separation membrane was cut into a spot size of 150 um under conditions of a pulse repetition rate of 20 kHz and a cutting speed of 2,400 mm/s.

### [Example 10]

The separation membrane was cut under the same conditions as in Example 9, except that a 80 W CO₂ laser was used, and the separation membrane was cut into a spot size of 660 um.

### Experimental Example 1. Comparison of Cross-Sectional Cutting Characteristics of Cut Separation Membrane

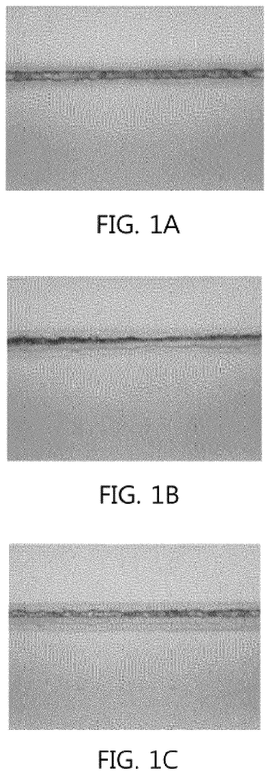

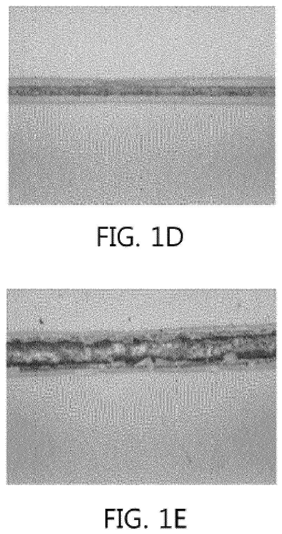

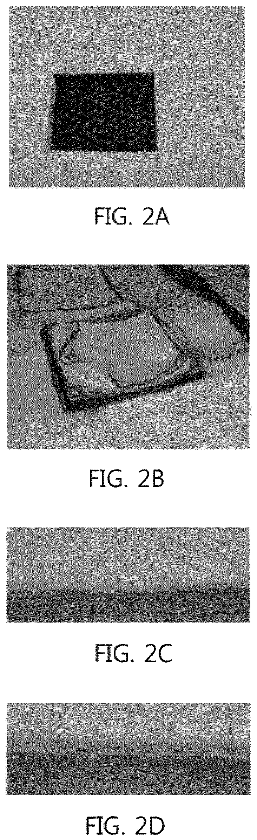

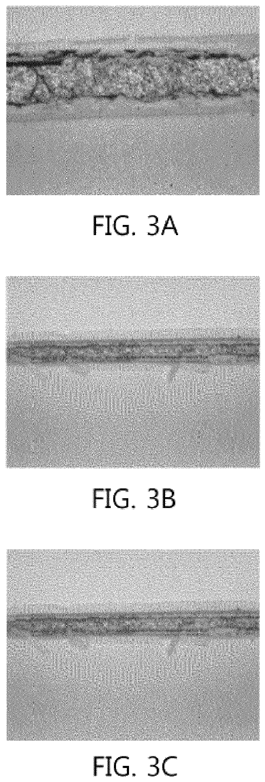

For the plastic films cut in Examples 1 to 7 and Comparative Examples 1 to 4, the cut cross sections were photographed by using an optical microscope (Olympus BX51, Olympus Optical Co., Ltd.), and Examples 1 to 4 and Comparative Example 1 are illustrated in FIG. 1A through IE, Example 5 and Comparative Example 2 are illustrated in FIG. 2A through 2D, and Examples 6 and 7 and Comparative Example 2 are illustrated in FIG. 3A through 3C. When FIG. 1 illustrating cross sections of the separation membrane cut according to the pulse repetition rate is reviewed, it can be seen that in the case of Comparative Example 1 illustrated in FIG. IE, it is very difficult to distinguish the coating layer from the base material layer in the separation membrane, the cross sections are rough, and a large amount of cracks occur. However, in the case of Examples 1 to 4 illustrated in FIGS. 1A to ID, it could be seen that the base material layer is clearly distinguished from the coating layer, and cracks also rarely occur on the cross sections.

Further, when 20 separation members are laminated, and then FIG. 2 illustrating the cross sections cut according to the pulse repetition rate is reviewed, in the case of Example 5 illustrated in FIG. 2A, the cross sections of the separation membrane (FIG. 2C) at the uppermost portion and the separation membrane (FIG. 2D) at the lowermost portion were equally cut, the base material layer is clearly distinguished from the coating layer, and cracks also rarely occur on the cross sections. However, in the case of Comparative Example 2 illustrated in FIG. 2B, it can be seen that it is very difficult to distinguish the coating layer from the base material layer in the separation membrane, the cross sections are rough, and a large amount of cracks occur.

Further, when FIG. 3 illustrating cross sections of the cross sections cut according to the cutting speed is reviewed, it can be seen that in the case of Comparative Example 3 illustrated in FIG. 3A, it is very difficult to distinguish the coating layer from the base material layer in the separation membrane, the cross sections are rough, and a large amount of cracks occur. However, in the case of Examples 6 and 7 illustrated in FIGS. 3B and 3C, it could be seen that the base material layer is clearly distinguished from the coating layer, and cracks also rarely occur on the cross sections.

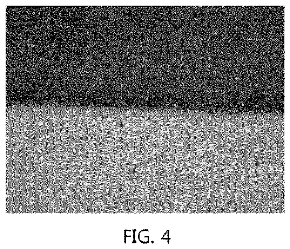

In addition, for the plastic film cut in Comparative Example 4 in which a conventional physical cutting method is used, the cross section was photographed by the same method, and is illustrated in FIG. 4. It could be confirmed that there was no significant difference between the cross sections of the films cut according to the Examples of the present invention and the cross sections of the films cut by the conventional physical cutting methods.

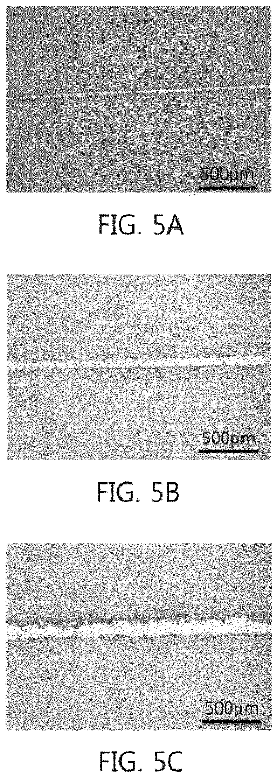

Furthermore, when FIG. 4 illustrating the cross sections cut according to the spot size of the CO₂ laser is reviewed, it could be seen that in the case of Examples 8 and 9 illustrated in FIGS. 5A and 5B, the base material layer is clearly distinguished from the coating layer, and cracks also rarely occur on the cross sections, but in the case of Example 10 illustrated in FIG. 5C, the cross section is rough.

Although the present invention has been described with reference to the drawings according to the Examples of the present invention, various applications and modifications may be made by a person with ordinary skill in the art to which the present invention pertains within the scope of the present invention, according to appended claims.

## Claims

1. A method for cutting a separation membrane for a battery, in which the separation membrane is cut by a laser radiation having a pulse repetition rate on the separation membrane,
**characterized in that**
the separation membrane has a structure in which 10 or more separation membranes are laminated,
and wherein
the pulse repetition rate of said laser is 10 to 40 kHz,
a cutting speed of said laser is 800 to 1,000 mm/s,
a wavelength of said laser is 300 to 1,200 nm
a pulse width of said laser is of 5 to 500 nm and
said laser is a pulse laser that has an output capacity of 20 to 500 W or
said laser is a CO₂ laser that has an output capacity of 10 to 200 W;
a spot size of said CO₂ laser is 50 to 200 µm.

2. The method of claim 1, wherein the membrane comprises a base material layer and a coating layer on one surface or both surfaces of the base material layer, and the base material layer includes a polyolefin-series polymer.

3. The method of claim 1, wherein said laser is a pulse laser that has an output capacity of 50 to 200 W, preferably 50 to 100 W.

## Patentansprüche

1. Verfahren zum Schneiden einer Trennmembran für eine Batterie, in welchem die Trennmembran mittels einer Laserbestrahlung mit einer Impulsfolgefrequenz an der Trennmembran geschnitten wird,
**dadurch gekennzeichnet, dass**
die Trennmembran eine Struktur aufweist, in welcher 10 oder mehr Trennmembranen laminiert sind,
und wobei
die Impulsfolgefrequenz des Lasers 10 bis 40 kHz beträgt,
eine Schneidgeschwindigkeit des Lasers 800 bis 1.000 mm/s beträgt,
eine Wellenlänge des Lasers 300 bis 1.200 nm beträgt,
eine Impulsbreite des Lasers 5 bis 500 nm beträgt und
der Laser ein Impulslaser ist, welcher eine Ausgangskapazität von 20 bis 500 W aufweist, oder
der Laser ein CO₂-Laser ist, welcher einer Ausgangskapazität von 10 bis 200 W aufweist;
eine Spotgröße des CO₂-Lasers 50 bis 200 µm beträgt.

2. Verfahren nach Anspruch 1, wobei die Membran eine Basismaterialschicht und eine Beschichtungsschicht an einer Oberfläche oder beiden Oberflächen der Basismaterialschicht umfasst und die Basismaterialschicht ein Polyolefin-Serien-Polymer umfasst.

3. Verfahren nach Anspruch 1, wobei der Laser ein Impulslaser ist, welcher eine Ausgangskapazität von 50 bis 200 W, vorzugsweise von 50 bis 100 W aufweist.

## Revendications

1. Procédé de découpe d'une membrane de séparation pour une batterie, dans lequel la membrane de séparation est découpée par un rayonnement laser présentant une fréquence de récurrence d'impulsions sur la membrane de séparation,
**caractérisé en ce que**
la membrane de séparation a une structure dans laquelle 10 membranes de séparation ou plus sont stratifiées,
et dans lequel
la fréquence de récurrence d'impulsions dudit laser est de 10 à 40 kHz,
une vitesse de découpe dudit laser est de 800 à 1 000 mm/s,
une longueur d'onde dudit laser est de 300 à 1 200 nm,
une largeur d'impulsion dudit laser est de 5 à 500 nm, et
ledit laser est un laser à impulsion qui a une puissance nette de 20 à 500 W ou
ledit laser est un laser de CO₂ qui a une puissance nette de 10 à 200 W ;
une taille de point dudit laser de CO₂ est de 50 à 200 µm.

2. Procédé selon la revendication 1, dans lequel la membrane comprend une couche de matériau de base et une couche de revêtement sur une surface ou les deux surfaces de la couche de matériau de base, et la couche de matériau de base comporte un polymère de la série des polyoléfines.

3. Procédé selon la revendication 1, dans lequel ledit laser est un laser à impulsion qui a une puissance nette de 50 à 200 W, de préférence de 50 à 100 W.
